# EUROPEAN PATENT SPECIFICATION

(11) **EP 1 581 065 B1**
(45) Date of publication and mention of the grant of the patent: **11.07.2007**
(21) Application number: 04700254.8
(22) Date of filing: 06.01.2004
(51) Int. Cl.: A23L 1/00, A23P 1/02, A23P 1/04, F26B 3/12, B05B 3/10, B01D 1/18, B01J 2/16, A23P 1/06

(54) **PROCESS FOR THE MANUFACTURE OF POWDEROUS PREPARATIONS OF FAT-SOLUBLE SUBSTANCES**
HERSTELLUNGSVERFAHREN FÜR PULVERPRÄPARATE AUS FETTLÖ SLICHEN SUBSTANZEN
PROCEDE DE FABRICATION DE PREPARATIONS EN POUDRE A PARTIR DE SUBSTANCES SOLUBLES DANS LA GRAISSE

(30) Priority: 10.01.2003 EP 03000365
(43) Date of publication of application: 05.10.2005
(73) Proprietor: DSM IP Assets B.V., 6411 TE Heerlen (NL)
(72) Inventor: SCHAFFNER, David, CH-4310 Rheinfelden (CH)
(74) Representative: Schwander, Kuno
(86) International application number: PCT/EP2004/000028
(87) International publication number: WO 2004/062382

(56) References cited:
- EP-A- 0 749 769
- WO-A-91/17821
- FR-A- 2 243 727
- US-A- 4 519 961
- US-A- 4 578 876
- US-A- 5 487 916
- US-A- 5 668 183

## Description

The present invention is concerned with a novel process for the manufacture of water-dispersible preparations of fat-soluble substances.

Water-dispersible preparations of fat-soluble substances, e.g. the fat-soluble vitamins, carotenoids, polyunsaturated fatty acids and the like, play an important rôle in the field of human and animal nutrition. Such preparations are usually marketed in the form of emulsions or dry powders because of their water-insolubility or also their more or less pronounced stability and ease of handling. It is a common feature of such preparations that the active substances, i.e. the fat-soluble substances, are usually enveloped with a matrix component (protective colloid), e.g. gum arabic or gelatine. This matrix component is responsible, inter alia, for the protection of the active substance or for its stabilization, for an optimum resorption and for the water-dispersibility of the final preparation which may be required. As the matrix component (protective colloid) there is normally used gelatine which originates from warm-blooded animals and which accordingly also has certain disadvantages. Merely by way of example there are to be mentioned here the fact that preparations based on such gelatine cannot be used worldwide for religious reasons, that without an expensive production process this gelatine and accordingly also the pulverous preparations manufactured therewith do not always have the desired dispersibility in cold water, etc. To overcome such drawbacks inherent to gelatine-base preparations the use of certain lignin derivatives as a matrix component instead of gelatine has been proposed, see, e.g., USP 5,668,183. A preferred process for the manufacture of such lignin derivative-based powderous preparations is the starch-catch process which is a spray-drying process where the sprayed emulsion particles are collected in a bed of starch. The so-obtained products consist of particles comprising the matrix component and the fat-soluble substance embedded therein which are covered by an adhesive layer of starch. The term "beadlets" as used herein refers to such particles.

Beadlets provide superiour handling properties in that they are not dusty and possess good flowablity characteristics. However, the production of lignin-derivative based beadlets and, generally, beadlets based on non-gelling matrix components, by the starch-catch process as described is accompanied by the formation of deposits in the spray tower which requires an interruption of the spray-drying process for cleaning the installation. It has now been found that the formation of deposit in the spray tower can be significantly suppressed or substantially avoided when a stream of cold air is introduced into the lower part of the spray tower, thus forming a fluidized bed which has a substantial lower temperature than the temperature of the spray zone, whereupon the beadlets are discharged from the fluidized bed to a dryer to complete the drying process.

Accordingly, in one aspect, the present invention relates to a process for the manufacture of beadlet preparations of fat-soluble substances in a water-soluble or water-dispersible non-gelling matrix, as disclosed in the appended claims.

In a further aspect, the present invention relates to an arrangement of nozzles as disclosed in the appended claims.

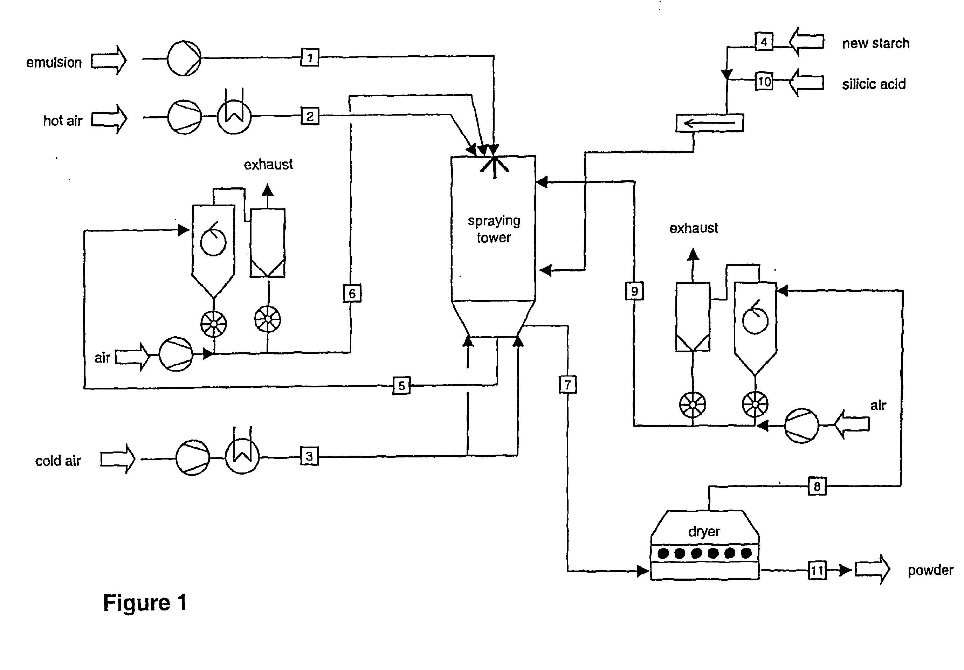

Figure 1 shows an installation for carrying out the process of the present invention. The spraying tower can be any conventional spraying tower having at its top separate inlets for the emulsion [1] which contains the fat-soluble substance, the matrix component and adjuvants, for fresh hot air [2], and for recycling hot air and starch[6]. In the middle part of the spraying tower inlets are provided for fresh supply of starch [4] and for recycling air from the dryer [9]. At the bottom of the drying tower, inlets are provided for cold air [3]. Through an outlet [5] air and starch leaving the spraying tower are recycled. The beadlets, i.e., the starch-covered particles comprising the matrix with the fat-soluble substance is collected at the bottom of the spraying tower and is discharged though outlet [7] to a dryer for removing residual humidity as required.

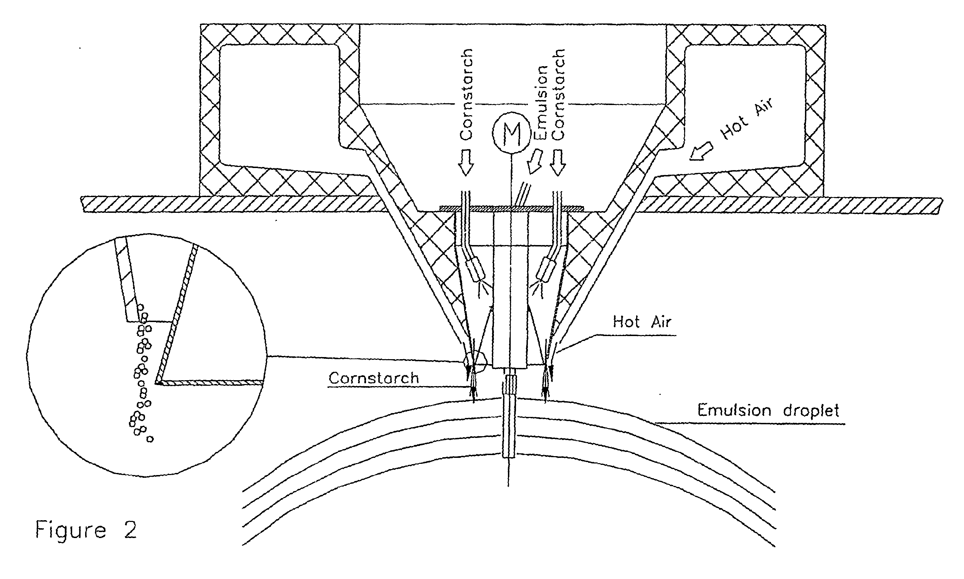

In a preferred embodiment, the spray-drying process according to the present invention is carried out using an arrangement of nozzles substantially as shown in Figure 2. The arrangement comprises a first, hollow cone the upper and wider end of which is closed and carries one or more inlets for a starch/air dispersion. A second, inner cone is fitted into the first, hollow outer cone in such a manner that it points in upward direction into said first cone, leaving at its end a small circular slot between its outer surface and the inner surface of the first cone so that the starch dispersion can pass the cone. In the axis of the cones a inlet tube for supply of the emulsion protrudes in downward direction over the second cone and ending with a rotary atomizer or pressure atomizer. The atomizer distributes the emulsion, the air and starch stream into the spray tower. The arrangement further has a conventional, circular air inlet channel surrounding the outer cone and ending slightly above the circular slot that is formed by the cones. The arrangement finally has appropriate means, e.g. a thread, to tightly fix it in the spraying tower.

The dimensions of the nozzle arrangement is not narrowly critical and depends on the requirements of the spraying capacity. The first, outer cone may have a radius of about 30 to about 40 cm at its upper end and a height of about 40 to about 50 cm. The second, inner cone may have a radius of about 20 to about 26 cm at its lower end and a height of about 15 to about 25 cm. The width of the slot formed between the inner and outer cone is suitably about 3 to about 10 mm. The inlet tube for the supply of the emulsion suitably has a diameter of about 80 to about 110 mm and the rotary atomizer suitably have a diameter of about 32 to about 42 mm. The inlet tubes for the supply of starch suitably have a diameter of about 3 to about 7 mm. The circular channel for hot air supply suitably has a width of about 50 to about 70 cm.

The temperature of the emulsion is suitably in the range of 15 °C to 80 °C. The ratio of hot air flow to cold air flow may be e.g., in the range of 1:8 to 1:4 (hot:cold). The hot air suitably has a temperature to provide a temperature in the spray zone of about 40 °C to about 200 °C, preferably about 60 °C to about 120 °C. Preferably, the hot air is dehumidified, e.g. to a water content of less than about 3 g/kg. For the fluidisation of the internal fluidized bed at the bottom of the tower cold and dry air (about 5-15°C) with a water content of less than about 3 g/kg is suitably used. The temperature of the internal fluidized bed is maintained within the range of about 0°C to about 40°C, preferably about 5°C to about 20°C by controlling the supply and temperature of the cold air.

For improved fluidising the product in the internal fluidized bed silicic acid [10] may be added. The silicic acid is added continuously to the starch flow [4] which is fed into the internal fluidized bed as required to compensate starch pick-up. Adjuvants may also be added here.

The starch used in the process of the present invention is preferably corn starch. The term "fat-soluble substances" embraces in the scope of the present invention especially the fat-soluble vitamins A, D, E and K, carotenoids such as, for example, β- carotene, astaxanthin, apocarotenal, canthaxanthin, apoester, citranaxanthin, zeaxanthin, lutein and lycopene . Examples for polyunsaturated fatty acids are e.g. linoleic acid, linolenic acid, arachidonic acid, docosahexaenic acid, eicosapentaenic acid and the like. However, there readily come into consideration other fat-soluble substances which play a rôle in human or animal nutrition. These substances, such as the previously mentioned, are usually marketed in the form of emulsions or dry powders because of their insolubility in water or also their more or less pronounced stability and ease of handling. Here there can be mentioned, in particular, oils and fats such as, for example, sunflower oil, palm oil and beef fat.

The matrix component in the emulsions that can be used in the process of the present invention is preferably a lignin derivative, especially a lignin derivative as described in USP 5,668,183 the contents of which are incorporated herein for reference purposes. Sodium, calcium and ammonium liginsulfonate are of particular interest. A mixture of several lignin derivatives can be used. Further examples of non-gelling matrix components for emulsions which can advantageously be processed into beadlet preparations (beadlets) in accordance with the present invention are modified starch, pectin and celluose derivates. The emulsions which are processed in accordance with the present invention may further contain adjuvants conventionally used in such preparations, e.g. anti-oxidants such as butylated hydroxyanisole, butylated hydroxytoluene, ethoxyquin, tocopherols, or humectants such as glycerol, sorbitol, polyethylene glycol or propylene glycol.

### The invention is illustrated further by the Example which follows:

### Example

An emulsion comprising 3 wt% of active component, e.g., d,I-α-tocopherol acetate, 43wt% of water, 50 wt% of lignin sulfonate and 4wt% of additives is prepared and processed in an installation as shown in Figure 1. In the following the reference numerals in brackets refer to the respective reference numerals in Fig. 1.

Corn starch is introduced into the spraying tower through inlet [4]. Subsequently, a flow of the emulsion [1] is sprayed into the spraying tower through an arrangement of nozzles as shown in Fig. 2. At the top of the tower hot air [2] of 80°C with a water content of 8 g/kg is fed in.

For the fluidization of the internal fluidized bed at the bottom of the tower cold, dried air [3] of 10°C with a water content of 1 g/kg is fed in.

Fresh cornstarch [4] is added as required to compensate starch pick-up by the beadlet formation. For fluidizing of the product in the internal fluidized bed silicic acid [10] may be added continuously to the starch flow. The fresh cornstarch as well as the silicic acid is fed directly in the internal fluidized bed.

Exhaust air [5] leaves the tower through a cylinder in the middle of the cone at the bottom of the tower. The cornstarch in this air is separated by a cyclone and recycled to the tower (directly in the atomizing zone). The temperature of this air is about 60°C, and the water content 12 g/kg. The recycled cornstarch [6] is atomized by two nozzles in the inner cone of the atomizer device. The finely distributed cornstarch fells down on the cone and contra cone and trickles afterwards through the slit that is formed by the two cones in the tower.

The particles (beadlets) leaving the spraying tower and containing some moisture are moved to an external dryer which is operated using dehumidified air. The beadlets [11] leaving the external dryer have an an avarage diameter of about 150-500 µm.

## Claims

1. A process for the manufacture of beadlet preparations of fat-soluble substances in a water-soluble or water-dispersible non-gelling matrix, wherein said matrix component is a lignin derivative, which process comprises
(a) feeding in the upper section of a vertical spray tower, through a spray nozzle an aqueous emulsion of said fat-soluble substance(s) and said matrix component, and, through separate inlets, powderous starch and a stream of hot air,
(b) feeding in the lower section of said spray tower a stream of cold air to form a fluidized bed of starch-covered beadlets comprising said matrix component said fat-soluble substances, and
(c) collecting said beadlets from the fluidized bed and discharging them to a dryer and wherein the aqueous emulsion, starch and a stream of hot air is fed into the spraying tower through an arrangement of nozzles comprising
(a) a first, hollow cone the upper and wider end of which is closed and carries one or more inlets for a starch/air dispersion;
(b) a second, inner cone fitted into the first, hollow outer cone in such a manner that it points in upward direction into said first cone, leaving at its end a small circular slot between its outer surface and the inner surface of the first cone;
(c) a inlet tube with closed end and rotary atomizer protruding in downward direction over the second cone and ending with a rotary atomizer or pressure atomizer; and
(d) a circular air inlet channel surrounding the outer cone and ending slightly above the circular slot that is formed by the cones.

2. A process as in claim 1 wherein the spray zone has a temperature of about 40 °C to about 200 °C, preferably about 60 °C to about 120 °C and the fluidized bed has a temperature of about 0 °C to about 40 °C, preferably about 5 to about 20 °C.

3. A process as in claim 1 or 2 wherein the lignin derivative is a lignin sulfonate.

4. A process as in any one of claims 1-3 wherein the fat-soluble substance is vitamin A, D, E and K, a carotenoid, a polyunsaturated fatty acid, an oil or a fat.

5. A process as in any one of claims 1-4 wherein the fat-soluble substance is β-carotene, astaxanthin, apocarotenal, canthaxanthin, apoester, citranaxanthin or zeaxanthin.

6. An arrangement of nozzles comprising
(a) a first, hollow cone the upper and wider end of which is closed and carries one or more inlets for a starch/air dispersion;
(b) a second, inner cone fitted into the first, hollow outer cone in such a manner that it points in upward direction into said first cone, leaving at its end a small circular slot between its outer surface and the inner surface of the first cone;
(c) a rotating inlet tube with closed end and small side openings protruding in downward direction over the second cone and ending with a rotary atomizer or pressure atomizer; and
(d) a circular air inlet channel surrounding the outer cone and ending slightly above the circular slot that is formed by the cones.

## Patentansprüche

1. Verfahren zur Herstellung von Kügelchen-Zubereitungen fettlöslicher Substanzen in einer wasserlöslichen oder wasserdispergierbaren nicht gelierenden Matrix, wobei es sich bei der Matrixkomponente um ein Ligninderivat handelt und das Verfahren das Folgende umfasst:
(a) Zuführen einer wässrigen Emulsion der fettlöslichen Substanz (en) und der Matrixkomponente durch eine Sprühdüse und pulverförmiger Stärke und eines Heißluftstroms durch separate Einlässe im oberen Abschnitt eines vertikalen Sprühturms,
(b) Zuführen eines Kaltluftstroms im unteren Abschnitt des Sprühturms, um ein Wirbelbett aus stärkebedeckten Kügelchen zu bilden, welche die Matrixkomponente und die fettlöslichen Substanzen umfassen, und
(c) Entnehmen der Kügelchen aus dem Wirbelbett und Austragen derselben zu einem Trockner, wobei die wässrige Emulsion, Stärke und ein Heißluftstrom dem Sprühturm durch eine Anordnung von Düsen zugeführt werden, welche das Folgende umfassen:
(a) einen ersten hohlen Kegel, von welchem das obere und breitere Ende geschlossen ist und einen oder mehrere Einlässe für eine Stärke/Luft-Dispersion aufweist;
(b) einen zweiten inneren Kegel, welcher in den ersten hohlen äußeren Kegel in solcher Weise eingepasst ist, dass er in Aufwärtsrichtung in den ersten Kegel hinein zeigt, wobei er an seinem Ende einen kleinen kreisförmigen Spalt zwischen seiner äußeren Fläche und der inneren Fläche des ersten Kegels lässt;
(c) ein Einlassrohr mit geschlossenem Ende und Rotationszerstäuber, welches in Abwärtsrichtung über den zweiten Kegel hinausragt und mit einem Rotationszerstäuber oder Druckzerstäuber endet; und
(d) einen kreisförmigen Lufteinlasskanal, welcher den äußeren Kegel umgibt und geringfügig oberhalb des kreisförmigen Spalts endet, welcher von den Kegeln gebildet wird.

2. Verfahren nach Anspruch 1, wobei die Sprühzone eine Temperatur von etwa 40 °C bis etwa 200 °C, vorzugsweise etwa 60 °C bis etwa 120 °C, aufweist und das Wirbelbett eine Temperatur von etwa 0 °C bis etwa 40 °C, vorzugsweise etwa 5 °C bis etwa 20 °C, aufweist.

3. Verfahren nach Anspruch 1 oder 2, wobei es sich bei dem Ligninderivat um ein Ligninsulfonat handelt.

4. Verfahren nach einem der Ansprüche 1 bis 3, wobei es sich bei der fettlöslichen Substanz um Vitamin A, D, E und K, ein Carotinoid, eine mehrfach ungesättigte Fettsäure, ein Öl oder ein Fett handelt.

5. Verfahren nach einem der Ansprüche 1 bis 4, wobei es sich bei der fettlöslichen Substanz um β-Carotin, Astaxanthin, Apocarotinal, Canthaxanthin, Apo-Ester, Citranaxanthin oder Zeaxanthin handelt.

6. Anordnung von Düsen, welche das Folgende umfasst:
(a) einen ersten hohlen Kegel, von welchem das obere und breitere Ende geschlossen ist und einen oder mehrere Einlässe für eine Stärke/Luft-Dispersion aufweist;
(b) einen zweiten inneren Kegel, welcher in den ersten hohlen äußeren Kegel in solcher Weise eingepasst ist, dass er in Aufwärtsrichtung in den ersten Kegel hinein zeigt, wobei er an seinem Ende einen kleinen kreisförmigen Spalt zwischen seiner äußeren Fläche und der inneren Fläche des ersten Kegels lässt;
(c) ein rotierendes Einlassrohr mit geschlossenem Ende und kleinen Seitenöffnungen, welches in Abwärtsrichtung über den zweiten Kegel hinausragt und mit einem Rotationszerstäuber oder Druckzerstäuber endet; und
(d) einen kreisförmigen Lufteinlasskanal, welcher den äußeren Kegel umgibt und geringfügig oberhalb des kreisförmigen Spalts endet, welcher von den Kegeln gebildet wird.

## Revendications

1. Procédé de fabrication de préparations en petites billes de substances liposolubles dans une matrice non-gélifiante, soluble dans l'eau ou dispersible dans l'eau, dans lequel ledit composant matriciel est un dérivé de lignine, lequel procédé comprend les étapes consistant à .
(a) charger dans la section supérieure d'une tour de pulvérisation verticale, à travers une buse de pulvérisation, une émulsion aqueuse de ladite ou desdites substances liposolubles et dudit composant matriciel et, à travers des entrées séparées, de l'amidon pulvérulent et un courant d'air chaud,
(b) charger dans la section inférieure de ladite tour de pulvérisation un courant d'air froid en vue de former un lit fluidisé de petites billes recouvertes d'amidon, comprenant ledit composant matriciel et lesdites substances liposolubles, et
(c) recueillir lesdites petites billes à partir du lit fluidisé et les décharger dans un dispositif de séchage, et l'émulsion aqueuse, l'amidon, et un courant d'air chaud étant chargés dans la tour de pulvérisation à travers un agencement de buses comprenant .
(a) un premier cône creux dont l'extrémité supérieure et la plus large est fermée et comporte une ou plusieurs entrées pour une dispersion d'amidon/air ;
(b) un deuxième cône interne ajusté dans le premier cône creux externe de telle sorte qu'il soit dirigé vers le haut dans ledit premier cône, en laissant à son extrémité une petite fente circulaire entre sa surface externe et la surface interne du premier cône ;
(c) un tube d'entrée avec un atomiseur rotatif et à extrémité fermée, faisant saillie vers le bas par-dessus le deuxième cône et se terminant par un atomiseur rotatif ou un atomiseur à pression; et
(d) un canal d'entrée d'air circulaire entourant le cône externe et se terminant légèrement au-dessus de la fente circulaire qui est formée par les cônes.

2. Procédé selon la revendication 1, dans lequel la zone de pulvérisation présente une température d'environ 40°C à environ 200°C, de préférence d'environ 60°C à environ 120°C, et le lit fluidisé présente une température d'environ 0°C à environ 40°C, de préférence d'environ 5°C à environ 20°C.

3. Procédé selon la revendication 1 ou 2, dans lequel le dérivé de lignine est un sulfonate de lignine.

4. Procédé selon l'une quelconque des revendications 1 à 3, dans lequel la substance liposoluble est la vitamine A, D, E et K, un caroténoïde, un acide gras polyinsaturé, une huile ou une graisse.

5. Procédé selon l'une quelconque des revendications 1 à 4, dans lequel la substance liposoluble est le β-carotène, l'astaxanthine, l'apocaroténal, la canthaxanthine, l'apoester, la citranaxanthine ou la zéaxanthine.

6. Agencement de buses comprenant :
(a) un premier cône creux dont l'extrémité supérieure et la plus large est fermée et comporte une ou plusieurs entrées pour une dispersion d'amidon/air ;
(b) un deuxième cône interne ajusté dans le premier cône creux externe de telle sorte qu'il soit dirigé vers le haut dans ledit premier cône, en laissant à son extrémité une petite fente circulaire entre sa surface externe et la surface interne du premier cône ;
(c) un tube d'entrée rotatif avec une extrémité fermée et de petites ouvertures latérales faisant saillie par le bas par-dessus le deuxième cône et se terminant par un atomiseur rotatif ou un atomiseur à pression ; et
(d) un canal d'entrée d'air circulaire entourant le cône externe et se terminant légèrement au-dessus de la fente circulaire qui est formée par les cônes.
